# EUROPÄISCHE PATENTSCHRIFT

(11) **EP 4 300 166 B1**
(45) Veröffentlichungstag und Bekanntmachung des Hinweises auf die Patenterteilung: **09.07.2025**
(21) Anmeldenummer: 23175053.0
(22) Anmeldetag: 24.05.2023
(51) Int. Cl.: G02B 27/01, B60K 35/23

(54) **HEAD-UP-DISPLAY UND FORTBEWEGUNGSMITTEL MIT EINEM HEAD-UP-DISPLAY**
HEAD-UP DISPLAY AND MEANS OF LOCOMOTION HAVING A HEAD-UP DISPLAY
AFFICHAGE TÊTE HAUTE ET MOYEN DE DÉPLACEMENT DOTÉ D'UN AFFICHAGE TÊTE HAUTE

(30) Priorität: 23.06.2022 DE 102022206293
(43) Veröffentlichungstag der Anmeldung: 03.01.2024
(73) Patentinhaber: VOLKSWAGEN AG, 38440 Wolfsburg (DE)
(72) Erfinder: Zozgornik, Steffen, 51381 Leverkusen (DE)

(56) Entgegenhaltungen:
- WO-A1-2019/087615
- DE-A1- 102011 075 884
- US-A1- 2017 235 136
- US-A1- 2017 336 628

## Beschreibung

Die vorliegende Erfindung betrifft ein Head-up-Display, insbesondere ein Head-up-Display für ein Fortbewegungsmittel. Die Erfindung betrifft weiterhin ein Fortbewegungsmittel mit einem solchen Head-up-Display.

Mit der stetigen Weiterentwicklung von Virtual & Augmented Reality-Technologien und - Anwendungen finden diese auch Einzug in das Automobil. Bei Augmented Reality (AR), auf Deutsch "erweiterte Realität", handelt es sich um die Anreicherung der realen Welt durch virtuelle Elemente, die im dreidimensionalen Raum ortskorrekt registriert sind und eine Echtzeitinteraktion erlauben. Da sich in der Fachwelt im deutschsprachigen Raum der Ausdruck "Augmented Reality" gegenüber dem Ausdruck "erweiterte Realität" durchgesetzt hat, wird im Folgenden ersterer benutzt.

Eine mögliche technische Realisierung, um den Fahrerarbeitsplatz mit virtuellen Erweiterungen anzureichern, bietet das Head-up-Display. Unter einem Head-up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-up-Displays bestehen im Allgemeinen aus einer bildgebenden Einheit bzw. PGU (Picture Generating Unit), einem optischen System und einer Projektionsfläche. Die bildgebende Einheit erzeugt das Bild und nutzt dazu zumindest ein Anzeigeelement. Das optische System projiziert das Bild auf die Projektionsfläche. Die Projektionsfläche ist eine teilweise spiegelnde, lichtdurchlässige Scheibe. Der Betrachter sieht also die von der bildgebenden Einheit dargestellten Inhalte als virtuelles Bild und gleichzeitig die reale Welt hinter der Scheibe. Als Projektionsfläche dient im Automobilbereich oftmals die Windschutzscheibe, deren gekrümmte Form bei der Darstellung berücksichtigt werden muss. Als Alternative wird zum Teil auch eine zusätzliche Scheibe aus Glas oder Kunststoff genutzt, die zwischen dem Fahrer und der Frontscheibe auf dem Armaturenbrett angeordnet ist. Durch das Zusammenwirken des optischen Systems und der Projektionsfläche ist das virtuelle Bild eine vergrößerte Darstellung des von der bildgebenden Einheit erzeugten Bildes. Durch die optische Überlagerung von Anzeige und Fahrszene sind weniger Kopf- und Augenbewegungen zum Ablesen der Informationen notwendig. Zudem verringert sich der Adaptationsaufwand für die Augen, da abhängig von der virtuellen Distanz der Anzeige weniger bis gar nicht akkommodiert werden muss.

Das optische System eines Head-up-Displays umfasst, insbesondere bei einem AR-Head-up-Display oder einem 3D-Head-up-Display, in der Regel zwei gegenüberliegend angeordnete Spiegel zur Faltung des Strahlengangs.

Beispielsweise beschreibt US 2020/0026073 A1 ein Head-up-Display mit einer Flüssigkristallanzeige und einer Projektionseinheit. Von der Projektionseinheit geht linear polarisiertes Anzeigelicht aus. Das Anzeigelicht wird durch einen von einer Lichtleiteinheit bereitgestellten optischen Pfad zu einer Windschutzscheibe geleitet. Die Lichtleiteinheit umfasst einen ersten Phasenschieber, ein reflektierendes Element, einen Vergrößerungsspiegel und einen linearen Polarisator. Der erste Phasenschieber sorgt dafür, dass Umgebungslicht nicht störend im Bild sichtbar ist.

Bei der bekannten Ausgestaltung müssen die Spiegel ausreichend weit voneinander entfernt stehen, damit sie nicht die Lichtwege zur Projektionsfläche und von der bildgebenden Einheit zum jeweils anderen Spiegel blockieren. Dies führt zu einem großen Volumen der gesamten Einheit.

Vor diesem Hintergrund beschreibt US 2017/0235136 A1 ein Head-up Display mit einem Anzeigepaneel, das Bildlicht emittiert, einem Polarisator, der das Bildlicht linear polarisiert, einem Spiegel, der das Bildlicht auf eine Windschutzscheibe eines Fahrzeugs reflektiert, einem polarisationsselektiven Spiegel, der dem Spiegel gegenüberliegt, und einem Phasenverzögerungsspiegel.

DE 10 2011 075 884 A1 beschreibt ein Head-up Display mit einer Licht abstrahlenden Bildquelle und mit optischen Elementen, die einen Strahlengang für Strahlenbündel bilden. Die optischen Elemente umfassen einen Reflektor und ein holographisches optisches Element mit einer vorgegebenen optischen Abbildungsfunktion, das im Strahlengang vom Reflektor räumlich getrennt positioniert ist.

WO 2019/087615 A1 beschreibt Head-up Display mit einem selektiv reflektierenden Element, das für einen bestimmten Winkelbereich als Spiegel wirkt und für andere Winkelbereiche transparent ist. Das selektiv reflektierende Element weist eine Multilayer-Beschichtung auf.

US 2017/0336628 A1 beschreibt ein Head-up-Display für ein Fahrzeug mit einer Bildgebungsvorrichtung, die so konfiguriert ist, dass sie Licht mit zwei zueinander senkrechten linearen Polarisationsrichtungen aussendet, und die polarisationsselektive Spiegel für ein selektives Reflektieren der beiden Polarisationsrichtungen nutzt.

Es ist eine Aufgabe der Erfindung, weitere Lösungen für die Realisierung eines Head-up-Displays mit einem reduzierten Bauraum bereitzustellen.

Diese Aufgabe wird durch ein Head-up-Display mit den Merkmalen des Anspruchs 1 sowie durch ein Fortbewegungsmittel gemäß Anspruch 14 gelöst. Bevorzugte Ausgestaltungen der Erfindung sind Gegenstand der abhängigen Ansprüche.

Gemäß einem ersten Aspekt der Erfindung weist ein Head-up-Display eine bildgebende Einheit zum Erzeugen eines Bildes und ein optisches System zum Projizieren des Bildes auf eine Projektionsfläche auf. Das optische System weist zumindest einen ersten Spiegel, einen neben dem ersten Spiegel angeordneten gekrümmten zweiten Spiegel und ein selektiv reflektierendes Element auf. Das selektiv reflektierende Element ist im optischen Pfad zwischen dem ersten Spiegel und dem zweiten Spiegel angeordnet. Das optische System ist so ausgestaltet, dass von der bildgebenden Einheit ausgehendes Licht auf das selektiv reflektierende Element trifft und dieses ungehindert durchläuft, auf den ersten Spiegel trifft und von diesem in Richtung des selektiv reflektierenden Elementes reflektiert wird, vom selektiv reflektierenden Element in Richtung des zweiten Spiegels reflektiert wird, vom zweiten Spiegel in Richtung des selektiv reflektierenden Elementes reflektiert wird, dieses ungehindert durchläuft und schließlich auf die Projektionsfläche trifft.

Bei der erfindungsgemäßen Lösung wird ein selektiv reflektierendes Element genutzt, um eine zusätzliche Faltung des Strahlengangs zu bewirken. Dies ermöglicht eine Volumenreduktion des Gesamtsystems. Das selektiv reflektierende Element ist dabei derart ausgestaltet, dass es vom Licht auf dem Weg von der bildgebenden Einheit zum ersten Spiegel und auf dem Weg vom zweiten Spiegel zur Projektionsfläche ungehindert durchlaufen werden kann. Auf diese Weise wird eine Blockade der Lichtwege vermieden. Zugleich werden vom selektiv reflektierenden Element zusätzliche optisch aktive Flächen an Orten im Strahlengang zur Verfügung gestellt, wo diese ohne das selektiv reflektierende Element nicht positionierbar waren, da sie im Strahlengang zwischen anderen Flächen zu Verschattungen führen würden. Dadurch, dass das selektiv reflektierende Element eine zusätzliche Faltung des Strahlengangs bewirkt, lassen sich die beiden Spiegel nebeneinander anordnen. Das Volumen des Systems kann durch diese Anordnung weiter reduziert werden.

Gemäß einem Aspekt der Erfindung ist das selektiv reflektierende Element ein richtungsselektiver Reflektor, der für einen bestimmten Winkelbereich als Spiegel wirkt und für andere Winkelbereiche transparent ist. Vorzugsweise wirkt der richtungsselektive Reflektor zumindest im Bereich 40°-60° als Spiegel und ist zumindest im Bereich 0°-25° transparent. Indem das von der bildgebenden Einheit ausgehende Licht unter einem kleinen Winkel auf das selektiv reflektierende Element trifft, wird es von diesem nicht reflektiert und gelangt ungehindert zum ersten Spiegel. Dieser ist so angeordnet, dass das vom ersten Spiegel reflektierte Licht unter einem deutlich größeren Winkel auf das selektiv reflektierende Element trifft und von diesem in Richtung des zweiten Spiegels reflektiert wird. Der zweite Spiegel ist nun wiederum so angeordnet, dass das von ihm reflektierte Licht unter einem kleinen Winkel auf das selektiv reflektierende Element trifft und daher ungehindert zur Projektionsfläche gelangt.

Gemäß einem Aspekt der Erfindung ist der richtungsselektive Reflektor als reflektives Volumengitter ausgestaltet. Die Richtungsselektivität des Reflektors kann durch verschiedene Lösungen erreicht werden. Bei einer ersten Lösung wird ein reflektives Volumengitter genutzt. Ein solches kann beispielsweise als Folie hergestellt werden, was die Handhabung vereinfacht. Ist das Volumengitter symmetrisch, d.h. sind Einfallswinkel und Ausfallswinkel gleich, weist das Gitter keine Dispersion auf. Dies wirkt sich vorteilhaft auf die Auswahl geeigneter Lichtquellen aus.

Gemäß einem Aspekt der Erfindung weist das reflektive Volumengitter eine zusätzliche optische Funktion auf. Beispielsweise kann das reflektive Volumengitter eine Linsenfunktion aufweisen. Durch die Kombination der Eigenschaft des reflektiven Volumengitters, den Strahlengang zu fakten, mit einer weiteren optischen Funktion, kann ein eventuell erforderliches weiteres optisches Element im Strahlengang eingespart werden. Beispielsweise erlaubt die Linsenfunktion eine zusätzliche Aberrationskorrektur in der Abbildung.

Gemäß einem Aspekt der Erfindung ist der richtungsselektive Reflektor als Substrat mit einer Multilayer-Dünnschichtbeschichtung ausgestaltet. Bei einer zweiten Lösung für das Erreichen der Richtungsselektivität des Reflektors wird eine interferenzbasierte Beschichtung genutzt.

Diese ist derart ausgestaltet, dass sie für Frequenzbänder für bestimmte Winkelbereiche transparent und für andere reflektiv ist. Die Verwendung von Dünnschichtbeschichtungen hat den Vorteil, dass sich diese sehr exakt mit gewünschten Eigenschaften herstellen lassen.

Gemäß einem Aspekt der Erfindung ist zumindest ein Bereich des Substrats als Linse ausgestaltet. Das Substrat, auf dem sich die Dünnschichtbeschichtung befindet, kann selbst als refraktive Linse ausgeführt werden, z.B. für eine zusätzliche Aberrationskorrektur. Dabei kann die spiegelnde Seite plan oder zylindrisch bleiben, um z.B. Beschichtungen auf Folie aufzunehmen.

Gemäß einem Aspekt der Erfindung ist das selektiv reflektierende Element ein polarisationsselektiver Reflektor. Vor dem ersten Spiegel und vor dem zweiten Spiegel ist in diesem Falls vorzugsweise jeweils eine Viertelwellenplatte angeordnet. Beispielsweise kann das das selektiv reflektierende Element eine Beschichtung aufweisen, die für S-polarisiertes Licht reflektiv ist, aber P-polarisiertes Licht transmittiert. Ergänzend ist dann sowohl vor dem ersten Spiegel als auch vor dem zweiten Spiegel eine Viertelwellenplatte positioniert, um mittels des doppelten Durchgangs durch die Viertelwellenplatte die Polarisation des Lichts auf dem Weg zu drehen.

Gemäß einem Aspekt der Erfindung sind der erste Spiegel und der zweite Spiegel einstückig gebildet. Dadurch, dass sich die beiden Spiegel nebeneinander anordnen lassen, besteht die Möglichkeit, die beide Spiegel in einem Stück zu produzieren. Typischerweise handelt es sich bei den Spiegeln um Freiformspiegel. Durch die einstückige Ausgestaltung wird einerseits ein Produktionsschritt eingespart, andererseits entfällt auch der Justageaufwand für die relative Ausrichtung der Spiegel bei der Montage des Gesamtsystems.

Gemäß einem Aspekt der Erfindung ist das selektiv reflektierende Element annähernd vertikal ausgerichtet. Unter einer annähernd vertikalen Ausrichtung ist dabei zu verstehen, dass die reflektierende Fläche unter einem Winkel von weniger als 45° relativ zur Vertikalen abgeordnet ist. Die Kippung des selektiv reflektierenden Elements in eine annähernd vertikale Position ist vorteilhaft zur Vermeidung von störenden Reflexionen von Sonnenlicht.

Gemäß einem Aspekt der Erfindung ist das selektiv reflektierende Element gekrümmt. Das selektiv reflektierende Element kann einerseits plan ausgeführt sein, aber es kann alternativ auch eine Krümmung aufweisen. Bei Materialien, die als Folie hergestellt werden, ist diese Krümmung bevorzugt zylindrisch. Es ist aber auch eine Ausführung mit komplexerer Formgebung möglich, die dann z.B. als Freiformspiegel wirkt.

Gemäß einem Aspekt der Erfindung ist benachbart zum selektiv reflektierenden Element zumindest eine zusätzliche Linse angeordnet. Auf dem bzw. nah bei dem Reflektor kann eine separate Linse positioniert werden, z.B. für eine zusätzliche Aberrationskorrektur in der Abbildung. Dies wäre im ungefalteten System ohne das selektiv reflektierende Element an diesem Ort nicht möglich, da die Linse einen anderen Strahlweg beeinflussen würde.

Besonders vorteilhaft wird ein erfindungsgemäßes Head-up-Display in einem Fortbewegungsmittel eingesetzt. Bei dem Fortbewegungsmittel kann es sich beispielsweise um ein Kraftfahrzeug handeln, z.B. einen Personenkraftwagen oder ein Nutzfahrzeug. Die Nutzung der erfindungsgemäßen Lösung hat dabei den Vorteil, dass das Head-up-Display mit einem reduzierten Bauraum auskommt und daher die Anordnung im Fortbewegungsmittel vereinfacht wird.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Head-up-Display gemäß dem Stand der Technik;
- Fig. 2: zeigt schematisch ein Head-up-Display mit einem horizontal angeordneten richtungsselektiven Reflektor;
- Fig. 3: zeigt schematisch ein Head-up-Display mit einem vertikal angeordneten richtungsselektiven Reflektor;
- Fig. 4: zeigt schematisch ein Head-up-Display mit einem gekrümmten richtungsselektiven Reflektor;
- Fig. 5: zeigt schematisch ein Head-up-Display mit einem richtungsselektiven Reflektor und zusätzlichen Linsen;
- Fig. 6: zeigt schematisch einen beispielhaften Aufbau eines richtungsselektiven Reflektors;
- Fig. 7: zeigt schematisch ein Head-up-Display mit einem polarisationsselektiven Reflektor; und
- Fig. 8: stellt schematisch ein Fortbewegungsmittel dar, in dem eine erfindungsgemäße Lösung realisiert ist.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

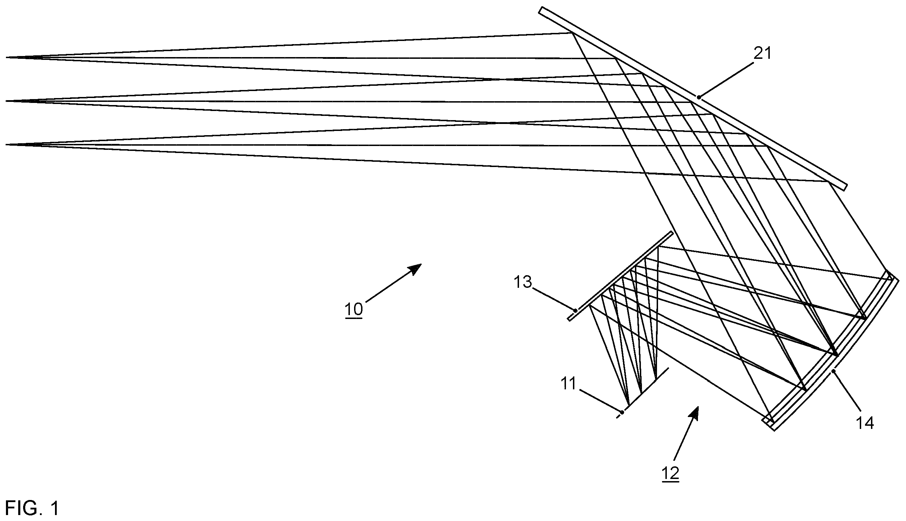

Fig. 1 zeigt schematisch ein Head-up-Display 10 gemäß dem Stand der Technik. Im gezeigten Beispiel handelt es sich um ein Head-up-Display 10 für ein Fortbewegungsmittel, z.B. ein Kraftfahrzeug. Mit Hilfe des Head-up-Displays 10 können Inhalte auf einer Projektionsfläche 21 des Kraftfahrzeugs angezeigt werden, beispielsweise auf der Frontscheibe oder auf einer zusätzlichen Scheibe aus Glas oder Kunststoff, die zwischen dem Fahrer und der Frontscheibe auf dem Armaturenbrett angeordnet ist. Die dargestellten Inhalte werden durch eine bildgebende Einheit 11 erzeugt und mit Hilfe eines optischen Systems 12 auf die Projektionsfläche 21 projiziert, sodass sie für einen Betrachter wahrnehmbar sind. Typischerweise erfolgt die Projektion dabei in einen Bereich der Frontscheibe oberhalb des Lenkrades. Das Head-up-Display 10 ist in der Regel in einem Armaturenbrett des Kraftfahrzeugs verbaut. Das optische System 12 weist einen ersten Spiegel 13 und einen zweiten Spiegel 14 auf. Der erste Spiegel 13 sorgt für eine Faltung des Strahlengangs und dient dazu, dass der vom Licht zurückgelegte Weg zwischen der bildgebenden Einheit 11 und dem zweiten Spiegel 14 lang ist und das optische System 12 dennoch kompakt ausfällt. Die bildgebende Einheit 11 kann zumindest eine Lichtquelle und einen räumlichen Lichtmodulator umfassen.

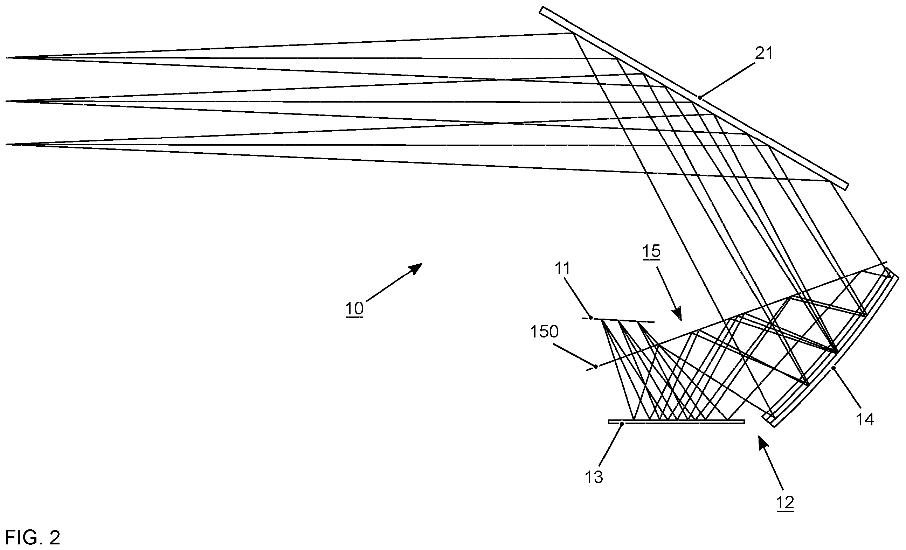

Fig. 2 zeigt schematisch ein Head-up-Display 10 mit einem horizontal angeordneten richtungsselektiven Reflektor 150. Im gezeigten Beispiel handelt es sich wiederum um ein Head-up-Display 10 für ein Kraftfahrzeug, mit einer bildgebenden Einheit 11 zum Erzeugen eines Bildes und einem optischen System 12 zum Projizieren des Bildes auf eine Projektionsfläche 21. Auch in diesem Fall weist das optische System 12 einen ersten Spiegel 13 und einen zweiten Spiegel 14 auf. Allerdings ist im optischen Pfad zwischen dem ersten Spiegel 13 und dem zweiten Spiegel 14 als selektiv reflektierendes Element 15 ein richtungsselektiver Reflektor 150 angeordnet, der für einen bestimmten Winkelbereich als Spiegel wirkt, z.B. im Bereich 40°-60°, und für andere Winkelbereiche transparent ist, z.B. im Bereich 0°-25°. Im gezeigten Beispiel ist der richtungsselektive Reflektor 150 annähernd horizontal angeordnet, d.h. die reflektierende Fläche des richtungsselektiven Reflektors 150 ist unter einem Winkel von weniger als 45° relativ zur Horizontalen angeordnet.

Indem das von der bildgebenden Einheit 11 ausgehende Licht unter kleinen Winkeln auf den richtungsselektiven Reflektor 150 trifft, wird es von diesem nicht reflektiert und gelangt ungehindert zum ersten Spiegel 13. Dieser ist so angeordnet, dass das vom ersten Spiegel 13 reflektierte Licht unter deutlich größeren Winkeln auf den richtungsselektiven Reflektor 150 trifft und von diesem in Richtung des zweiten Spiegels 14 reflektiert wird. Der zweite Spiegel 14 ist nun wiederum so angeordnet, dass das von ihm reflektierte Licht unter kleinen Winkeln auf den richtungsselektiven Reflektor 150 trifft und daher ungehindert zur Projektionsfläche 21 gelangt.

Der richtungsselektive Reflektor 150 wird somit genutzt, um eine zusätzliche Faltung des Strahlengangs zu bewirken. Zugleich wird eine Blockade der Lichtwege vermieden. Durch die zusätzliche Faltung des Strahlengangs ist es möglich, die beiden Spiegel 13, 14 nebeneinander anzuordnen, wodurch eine Volumenreduktion des Gesamtsystems erreicht wird. Insbesondere können die beiden Spiegel 13, 14 einstückig gebildet sein.

Die Richtungsselektivität des Reflektors 150 kann durch verschiedene Lösungen erreicht werden. Bei einer ersten Lösung wird ein reflektives Volumengitter genutzt. Ein solches kann beispielsweise als Folie hergestellt werden. Bei einer zweiten Lösung ist der richtungsselektive Reflektor 150 als Substrat mit einer Multilayer-Dünnschichtbeschichtung ausgestaltet.

Die bildgebende Einheit 11 kann zumindest eine Lichtquelle und einen räumlichen Lichtmodulator umfassen. Beispielsweise kann es sich um ein TFT-Display handeln (TFT: Thin Film Transistor; Dünnschichttransistor), um ein OLED-Display (OLED: Organic Light Emitting Diode; Organische Leuchtdiode) oder ein Micro-LED Display (LED: Light Emitting Diode; Leuchtdiode). Auch kann an diesem Ort ein projiziertes Bild aus einem transmissivem oder reflektivem Display oder das Fourier Bild aus einem Phasendisplay genutzt werden.

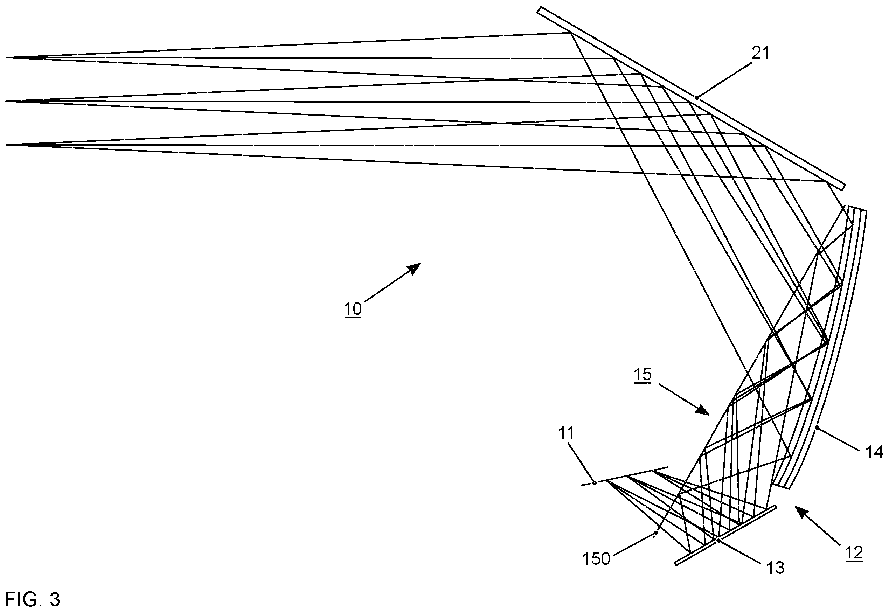

Fig. 3 zeigt schematisch ein Head-up-Display 10 mit einem vertikal angeordneten richtungsselektiven Reflektor 150. Der Aufbau des Head-up-Displays 10 entspricht weitgehend dem des Head-up-Displays 10 aus Fig. 2. Allerdings ist der richtungsselektive Reflektor 150 als selektiv reflektierendes Element 15 bei dieser Ausführungsform annähernd vertikal angeordnet, d.h. die reflektierende Fläche des richtungsselektiven Reflektors 150 ist unter einem Winkel von weniger als 45° relativ zur Vertikalen angeordnet. Die Kippung des richtungsselektiven Reflektors 150 in eine annähernd vertikale Position ist vorteilhaft zur Vermeidung von störenden Reflexionen von Sonnenlicht. Wie schon bei der Ausführungsform in Fig. 2 wirkt der richtungsselektive Reflektor 150 für einen bestimmten Winkelbereich als Spiegel, z.B. im Bereich 40°-60°, während er für andere Winkelbereiche transparent ist, z.B. im Bereich 0°-25°.

Auch bei dieser Ausführungsform trifft das von der bildgebenden Einheit 11 ausgehende Licht unter kleinen Winkeln auf den richtungsselektiven Reflektor 150. Es wird daher von diesem nicht reflektiert und gelangt ungehindert zum ersten Spiegel 13. Dieser ist so angeordnet, dass das vom ersten Spiegel 13 reflektierte Licht unter deutlich größeren Winkeln auf den richtungsselektiven Reflektor 150 trifft und von diesem in Richtung des zweiten Spiegels 14 reflektiert wird. Der zweite Spiegel 14 ist nun wiederum so angeordnet, dass das von ihm reflektierte Licht unter kleineren Winkeln auf den richtungsselektiven Reflektor 150 trifft und daher ungehindert zur Projektionsfläche 21 gelangt. Durch die vom richtungsselektiven Reflektor 150 bewirkte zusätzliche Faltung des Strahlengangs ist es auch hier möglich, die beiden Spiegel 13, 14 nebeneinander anzuordnen. Insbesondere können die beiden Spiegel 13, 14 wiederum einstückig gebildet sein.

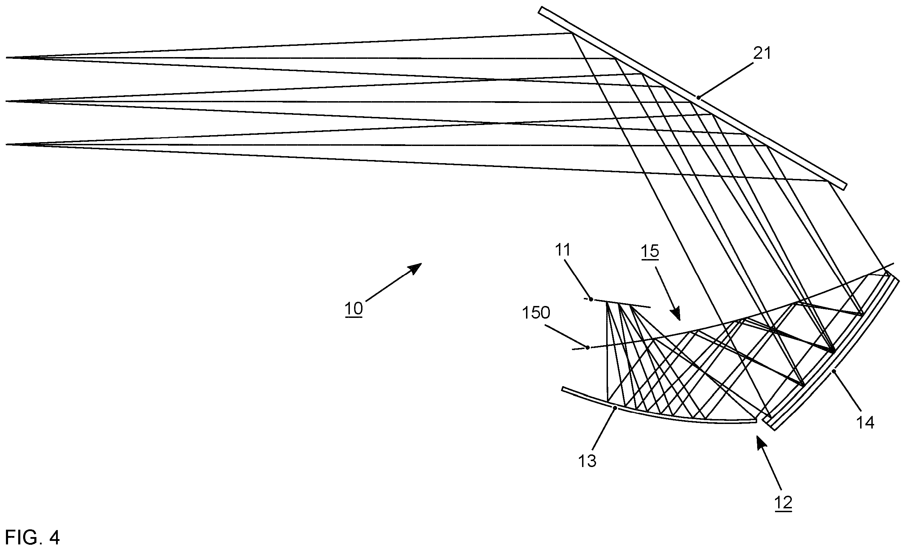

Fig. 4 zeigt schematisch ein Head-up-Display 10 mit einem gekrümmten richtungsselektiven Reflektor 150 als selektiv reflektierendes Element 15. Der Aufbau des Head-up-Displays 10 entspricht weitgehend dem des Head-up-Displays 10 aus Fig. 2. Allerdings ist der richtungsselektive Reflektor 150 bei dieser Ausführungsform gekrümmt. Vorzugsweise ist diese Krümmung zylindrisch, z.B. zur Verwendung von Materialien, die als Folie hergestellt werden. Es ist aber auch eine Ausführung mit komplexerer Formgebung möglich, die dann z.B. als Freiformspiegel wirkt. Wie schon bei der Ausführungsform in Fig. 2 wirkt der richtungsselektive Reflektor 150 für einen bestimmten Winkelbereich als Spiegel, z.B. im Bereich 40°-60°, während er für andere Winkelbereiche transparent ist, z.B. im Bereich 0°-25°.

Auch bei dieser Ausführungsform trifft das von der bildgebenden Einheit 11 ausgehende Licht unter kleinen Winkeln auf den richtungsselektiven Reflektor 150. Es wird daher von diesem nicht reflektiert und gelangt ungehindert zum ersten Spiegel 13. Dieser weist bei dieser Ausführungsform ebenfalls eine Krümmung auf und ist so angeordnet, dass das vom ersten Spiegel 13 reflektierte Licht unter deutlich größeren Winkeln auf den richtungsselektiven Reflektor 150 trifft und von diesem in Richtung des zweiten Spiegels 14 reflektiert wird. Der zweite Spiegel 14 ist nun wiederum so angeordnet, dass das von ihm reflektierte Licht unter kleineren Winkeln auf den richtungsselektiven Reflektor 150 trifft und somit ungehindert zur Projektionsfläche 21 gelangt. Durch die vom richtungsselektiven Reflektor 150 bewirkte zusätzliche Faltung des Strahlengangs ist es auch hier möglich, die beiden Spiegel 13, 14 nebeneinander anzuordnen. Insbesondere können die beiden Spiegel 13, 14 wiederum einstückig gebildet sein.

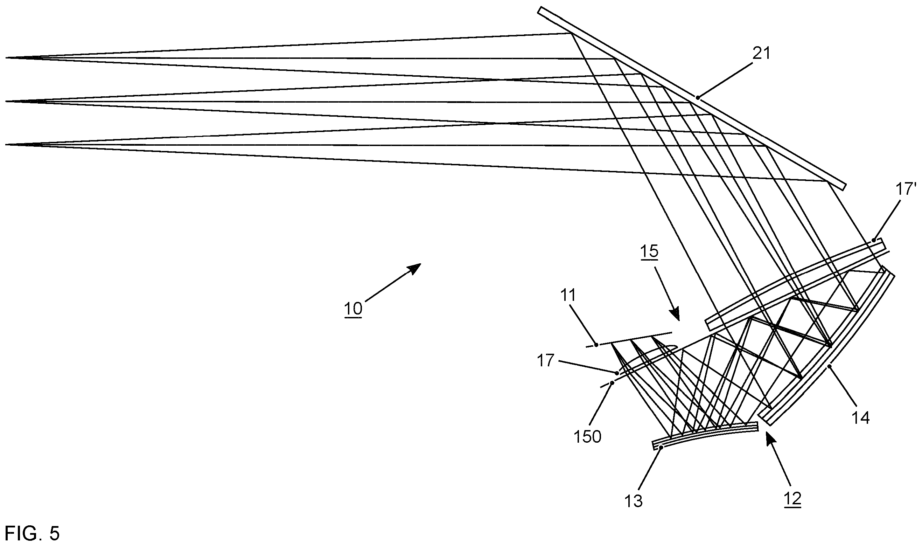

Fig. 5 zeigt schematisch ein Head-up-Display 10 mit einem richtungsselektiven Reflektor 150 als selektiv reflektierendes Element 15 und zusätzlichen Linsen 17, 17'. Der Aufbau des Head-up-Displays 10 entspricht weitgehend dem des Head-up-Displays 10 aus Fig. 2. Wie schon bei der Ausführungsform in Fig. 2 wirkt der richtungsselektive Reflektor 150 für einen bestimmten Winkelbereich als Spiegel, z.B. im Bereich 40°-60°, während er für andere Winkelbereiche transparent ist, z.B. im Bereich 0°-25°. Durch den richtungsselektiven Reflektor 150 werden zusätzliche optisch aktive Flächen im Strahlengang zur Verfügung gestellt, an denen in diesem Beispiel zwei zusätzliche Linsen 17, 17' angeordnet sind. Diese können beispielsweise für eine zusätzliche Aberrationskorrektur in der Abbildung genutzt werden.

Wie auch bei den vorherigen Ausführungsformen trifft das von der bildgebenden Einheit 11 ausgehende Licht unter kleinen Winkeln auf den richtungsselektiven Reflektor 150. Es wird daher von diesem nicht reflektiert und gelangt ungehindert zum ersten Spiegel 13. Dieser weist im gezeigten Beispiel ebenfalls eine Krümmung auf und ist so angeordnet, dass das vom ersten Spiegel 13 reflektierte Licht unter deutlich größeren Winkeln auf den richtungsselektiven Reflektor 150 trifft und von diesem in Richtung des zweiten Spiegels 14 reflektiert wird. Der zweite Spiegel 14 ist nun wiederum so angeordnet, dass das von ihm reflektierte Licht unter kleineren Winkeln auf den richtungsselektiven Reflektor 150 trifft und somit ungehindert zur Projektionsfläche 21 gelangt. Durch die vom richtungsselektiven Reflektor 150 bewirkte zusätzliche Faltung des Strahlengangs ist es auch hier möglich, die beiden Spiegel 13, 14 nebeneinander anzuordnen. Insbesondere können die beiden Spiegel 13, 14 wiederum einstückig gebildet sein.

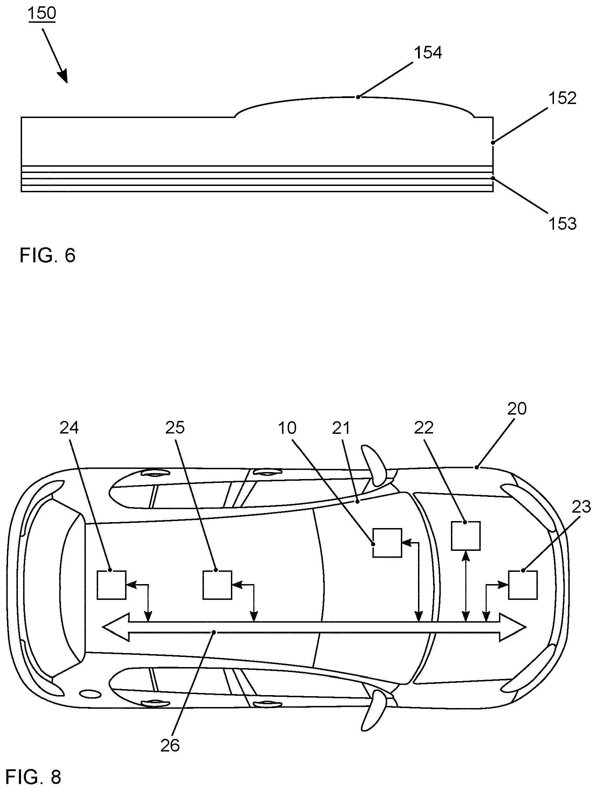

Fig. 6 zeigt schematisch einen beispielhaften Aufbau eines richtungsselektiven Reflektors 150. Der richtungsselektive Reflektor 150 weist ein Substrat 152 auf, das mit einer Beschichtung 153 versehen ist. Bei der Beschichtung 153 kann es sich beispielsweise um eine Multilayer-Dünnschichtbeschichtung handeln. Diese ist derart ausgestaltet, dass sie für Frequenzbänder für bestimmte Winkelbereiche transparent und für andere reflektiv ist. Die Schichten der Beschichtung 153 können direkt auf das Substrat 152 aufgebracht werden, die Beschichtung 153 kann aber auch in Form einer Folie hergestellt und dann als Ganzes auf das Substrat 152 aufgebracht werden.

Im dargestellten Beispiel ist das Substrat 152 plan, es kann alternativ auch eine Krümmung aufweisen. Falls die Beschichtung 153 als Folie aufgebracht werden soll, ist diese Krümmung bevorzugt zylindrisch. Es ist aber auch eine Ausführung mit komplexerer Formgebung möglich, die dann z.B. als Freiformspiegel wirkt. Zudem ist in Fig. 6 ein Bereich des Substrats 152 als Linse 154 ausgestaltet, z.B. für eine zusätzliche Aberrationskorrektur.

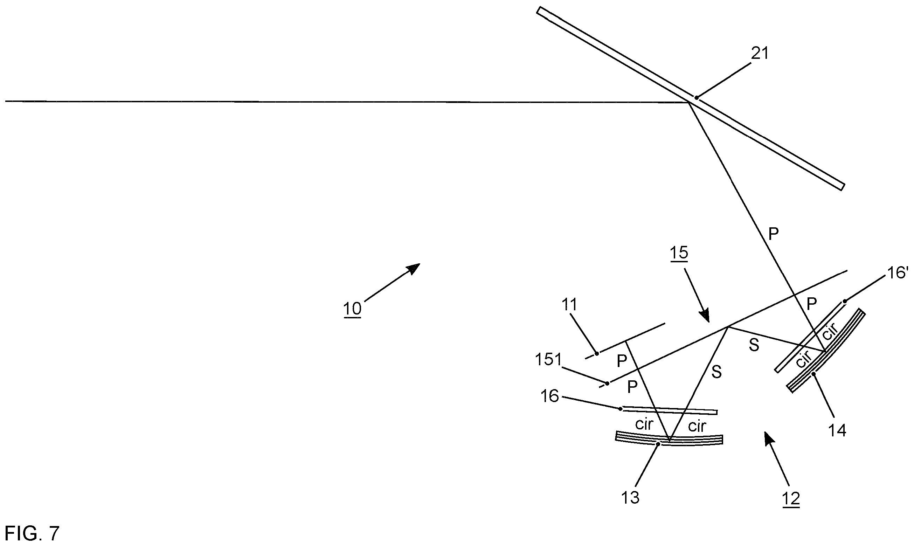

Fig. 7 zeigt schematisch ein Head-up-Display 10 mit einem polarisationsselektiven Reflektor 151. Bei diesem Ansatz zur Realisierung eines selektiven Reflektors 15 wird anstelle einer Richtungsselektivität eine Polarisationsselektivität genutzt. Im gezeigten Beispiel ist der polarisationsselektive Reflektor 151 so ausgestaltet, z.B. durch eine geeignete Beschichtung, dass er für S-polarisiertes Licht reflektiv ist, aber P-polarisiertes Licht transmittiert. Das von der bildgebenden Einheit 11 ausgehende Licht ist P-polarisiert und kann daher den polarisationsselektiven Reflektor 151 ungehindert passieren. Es durchläuft eine vor dem ersten Spiegel 13 angeordnete Viertelwellenplatte 16, sodass das Licht zirkular polarisiert ist. Nach der Reflexion am ersten Spiegel 13 durchläuft das zirkular polarisierte Licht erneut die Viertelwellenplatte 16, sodass es nunmehr S-polarisiert ist. Es wird daher im weiteren Verlauf vom polarisationsselektiven Reflektor 151 in Richtung des zweiten Spiegels 14 reflektiert. Vor dem zweiten Spiegel 14 ist eine weitere Viertelwellenplatte 16' angeordnet. Das nach der Reflexion am zweiten Spiegel 14 auf den polarisationsselektiven Reflektor 151 ist daher wieder P-polarisiert und kann den polarisationsselektiven Reflektor 151 ungehindert in Richtung der Projektionsfläche 21 passieren.

Sollte die bildgebende Einheit 11 S-polarisiertes Licht abstrahlen, muss der polarisationsselektive Reflektor 151 entsprechend angepasst werden. In diesem Fall muss er für P-polarisiertes Licht reflektiv sein, aber S-polarisiertes Licht transmittieren.

Fig. 8 stellt schematisch ein Fortbewegungsmittel 20 dar, in dem eine erfindungsgemäße Lösung realisiert ist. Bei dem Fortbewegungsmittel 20 handelt es sich in diesem Beispiel um ein Kraftfahrzeug. Das Kraftfahrzeug weist ein erfindungsgemäßes Head-up-Display 10 auf. Als Projektionsfläche 21 dient in diesem Beispiel die Windschutzscheibe des Kraftfahrzeugs. Vorzugsweise ist die Anzeigevorrichtung 42 berührungsempfindlich ausgestaltet. Weitere Komponenten des Kraftfahrzeugs sind ein Assistenzsystem 22, eine Umgebungssensorik 23 zum Erfassen von Umgebungsinformationen, wie Kameras, Radarsensoren, Lidarsensoren oder Ultraschallsensoren, sowie eine Datenübertragungseinheit 24. Mittels der Datenübertragungseinheit 24 kann beispielsweise eine Verbindung zu einem Backend aufgebaut werden, z.B. zum Übermitteln von gesammelten Daten oder zum Abrufen aktualisierter Software für die Komponenten des Kraftfahrzeugs. Zur Speicherung von Daten ist ein Speicher 25 vorhanden. Der Datenaustausch zwischen den verschiedenen Komponenten des Kraftfahrzeugs erfolgt über ein Netzwerk 26.

### Bezugszeichenliste

- 10: Head-up-Display
- 11: Bildgebende Einheit
- 12: Optisches System
- 13: Erster Spiegel
- 14: Zweiter Spiegel
- 15: Selektiv reflektierendes Element
- 16, 16': Viertelwellenplatte
- 17, 17': Linse
- 20: Fortbewegungsmittel
- 21: Projektionsfläche
- 22: Assistenzsystem
- 23: Umgebungssensorik
- 24: Datenübertragungseinheit
- 25: Speicher
- 26: Netzwerk
- 150: Richtungsselektiver Reflektor
- 151: Polarisationsselektiver Reflektor
- 152: Substrat
- 153: Beschichtung
- 154: Linse

## Patentansprüche

1. Head-up-Display (10) mit:
- einer bildgebenden Einheit (11) zum Erzeugen eines Bildes; und
- einem optischen System (12) zum Projizieren des Bildes auf eine Projektionsfläche (21), wobei das optische System (12) zumindest einen ersten Spiegel (13), einen neben dem ersten Spiegel (13) angeordneten gekrümmten zweiten Spiegel (14) und ein selektiv reflektierendes Element (15) aufweist, das im optischen Pfad zwischen dem ersten Spiegel (13) und dem zweiten Spiegel (14) angeordnet ist, und wobei das optische System (12) so ausgestaltet ist, dass von der bildgebenden Einheit (11) ausgehendes Licht:
- auf das selektiv reflektierende Element (15) trifft und dieses ungehindert durchläuft;
- auf den ersten Spiegel (13) trifft und von diesem in Richtung des selektiv reflektierenden Elementes (15) reflektiert wird;
- vom selektiv reflektierenden Element (15) in Richtung des zweiten Spiegels (14) reflektiert wird;
- vom zweiten Spiegel (14) in Richtung des selektiv reflektierenden Elementes (15) reflektiert wird und dieses ungehindert durchläuft; und
- auf die Projektionsfläche (21) trifft.

2. Head-up-Display (10) gemäß Anspruch 1, wobei das selektiv reflektierende Element (15) ein richtungsselektiver Reflektor (150) ist, der für einen bestimmten Winkelbereich als Spiegel wirkt und für andere Winkelbereiche transparent ist.

3. Head-up-Display (10) gemäß Anspruch 2, wobei der richtungsselektive Reflektor (150) zumindest im Bereich 40°-60° als Spiegel wirkt und zumindest im Bereich 0°-25° transparent ist.

4. Head-up-Display (10) gemäß Anspruch 2 oder 3, wobei der richtungsselektive Reflektor (150) als reflektives Volumengitter ausgestaltet ist.

5. Head-up-Display (10) gemäß Anspruch 4, wobei das reflektive Volumengitter eine zusätzliche optische Funktion aufweist.

6. Head-up-Display (10) gemäß Anspruch 5, wobei das reflektive Volumengitter eine Linsenfunktion aufweist.

7. Head-up-Display (10) gemäß Anspruch 2 oder 3, wobei der richtungsselektive Reflektor (150) als Substrat (152) mit einer Multilayer-Dünnschichtbeschichtung (153) ausgestaltet ist.

8. Head-up-Display (10) gemäß Anspruch 7, wobei zumindest ein Bereich des Substrats (152) als Linse (153) ausgestaltet ist.

9. Head-up-Display (10) gemäß Anspruch 1, wobei das selektiv reflektierende Element (15) ein polarisationsselektiver Reflektor (151) ist, und wobei vor dem ersten Spiegel (13) und vor dem zweiten Spiegel (14) jeweils eine Viertelwellenplatte (16, 16') angeordnet ist.

10. Head-up-Display (10) gemäß einem der vorherigen Ansprüche, wobei der erste Spiegel (13) und der zweite Spiegel (14) einstückig gebildet sind.

11. Head-up-Display (10) gemäß einem der vorherigen Ansprüche, wobei das selektiv reflektierende Element (15) annähernd vertikal ausgerichtet ist.

12. Head-up-Display (10) gemäß einem der vorherigen Ansprüche, wobei das selektiv reflektierende Element (15) gekrümmt ist.

13. Head-up-Display (10) gemäß einem der vorherigen Ansprüche, wobei benachbart zum selektiv reflektierenden Element (15) zumindest eine zusätzliche Linse (17, 17') angeordnet ist.

14. Fortbewegungsmittel (20), **dadurch gekennzeichnet, dass** das Fortbewegungsmittel (20) ein Head-up-Display (10) gemäß einem der vorherigen Ansprüche aufweist.

## Claims

1. Head-up display (10) comprising:
- an imaging unit (11) for generating an image; and
- an optical system (12) for projecting the image onto a projection surface (21), wherein the optical system (12) comprises at least a first mirror (13), a curved second mirror (14) arranged next to the first mirror (13) and a selectively reflective element (15) arranged in the optical path between the first mirror (13) and the second mirror (14), and wherein the optical system (12) is designed such that light emitted from the imaging unit (11):
- strikes the selectively reflective element (15) and passes through it unhindered;
- strikes the first mirror (13) and is reflected by it in the direction of the selectively reflective element (15);
- is reflected by the selectively reflective element (15) in the direction of the second mirror (14);
- is reflected by the second mirror (14) in the direction of the selectively reflective element (15) and passes through it unhindered; and
- strikes the projection surface (21).

2. Head-up display (10) according to claim 1, wherein the selectively reflective element (15) is a direction-selective reflector (150) which acts as a mirror for a certain angular range and is transparent for other angular ranges.

3. Head-up display (10) according to claim 2, wherein the direction-selective reflector (150) acts as a mirror at least in the 40°-60° range and is transparent at least in the 0°-25° range.

4. Head-up display (10) according to either claim 2 or claim 3, wherein the direction-selective reflector (150) is designed as a reflective volume grating.

5. Head-up display (10) according to claim 4, wherein the reflective volume grating has an additional optical function.

6. Head-up display (10) according to claim 5, wherein the reflective volume grating has a lens function.

7. Head-up display (10) according to either claim 2 or claim 3, wherein the direction-selective reflector (150) is designed as a substrate (152) having a multilayer thin-film coating (153).

8. Head-up display (10) according to claim 7, wherein at least a portion of the substrate (152) is designed as a lens (153).

9. Head-up display (10) according to claim 1, wherein the selectively reflective element (15) is a polarization-selective reflector (151), and wherein a quarter-wave plate (16, 16') is arranged in front of the first mirror (13) and in front of the second mirror (14) in each case.

10. Head-up display (10) according to any of the preceding claims, wherein the first mirror (13) and the second mirror (14) are integrally formed.

11. Head-up display (10) according to any of the preceding claims, wherein the selectively reflective element (15) is aligned approximately vertically.

12. Head-up display (10) according to any of the preceding claims, wherein the selectively reflective element (15) is curved.

13. Head-up display (10) according to any of the preceding claims, wherein at least one additional lens (17, 17') is arranged adjacent to the selectively reflective element (15).

14. Transportation means (20), **characterized in that** the transportation means (20) comprises a head-up display (10) according to any of the preceding claims.

## Revendications

1. Afficheur tête haute (10) comportant :
- une unité d'imagerie (11) pour produire une image ; et
- un système optique (12) pour projeter l'image sur une surface de projection (21), dans lequel le système optique (12) présente au moins un premier miroir (13), un second miroir (14) incurvé agencé à côté du premier miroir (13), et un élément de réflexion sélective (15) agencé dans le chemin optique entre le premier miroir (13) et le second miroir (14), et dans lequel le système optique (12) est réalisé de telle sorte que la lumière provenant de l'unité d'imagerie (11) :
- atteint l'élément de réflexion sélective (15) et le traverse sans obstacle ;
- atteint le premier miroir (13) et est réfléchi par celui-ci en direction de l'élément de réflexion sélective (15) ;
- est réfléchie par l'élément de réflexion sélective (15) en direction du second miroir (14) ;
- est réfléchie par le second miroir (14) en direction de l'élément de réflexion sélective (15) et le traverse sans obstacle ; et
- atteint la surface de projection (21).

2. Afficheur tête haute (10) selon la revendication 1, dans lequel l'élément de réflexion sélective (15) est un réflecteur sélectif directionnel (150) qui agit comme un miroir pour une certaine plage angulaire et qui est transparent pour d'autres plages angulaires.

3. Afficheur tête haute (10) selon la revendication 2, dans lequel le réflecteur sélectif directionnel (150) agit comme un miroir au moins dans la plage de 40 ° à 60 ° et est transparent au moins dans la plage de 0 ° à 25 °.

4. Afficheur tête haute (10) selon la revendication 2 ou 3, dans lequel le réflecteur sélectif directionnel (150) est réalisé sous la forme d'un réseau volumique réflecteur.

5. Afficheur tête haute (10) selon la revendication 4, dans lequel le réseau volumique réflecteur présente une fonction optique supplémentaire.

6. Afficheur tête haute (10) selon la revendication 5, dans lequel le réseau volumique réflecteur présente une fonction de lentille.

7. Afficheur tête haute (10) selon la revendication 2 ou 3, dans lequel le réflecteur sélectif directionnel (150) est réalisé comme un substrat (152) comportant un revêtement multicouche à couche mince (153).

8. Afficheur tête haute (10) selon la revendication 7, dans lequel au moins une zone du substrat (152) est réalisée comme une lentille (153).

9. Afficheur tête haute (10) selon la revendication 1, dans lequel l'élément de réflexion sélective (15) est un réflecteur à sélection de polarisation (151), et dans lequel une plaque quart d'onde (16, 16') est agencée respectivement devant le premier miroir (13) et devant le second miroir (14).

10. Afficheur tête haute (10) selon l'une des revendications précédentes, dans lequel le premier miroir (13) et le second miroir (14) sont formés d'un seul tenant.

11. Afficheur tête haute (10) selon l'une des revendications précédentes, dans lequel l'élément de réflexion sélective (15) est orienté approximativement verticalement.

12. Afficheur tête haute (10) selon l'une des revendications précédentes, dans lequel l'élément de réflexion sélective (15) est incurvé.

13. Afficheur tête haute (10) selon l'une des revendications précédentes, dans lequel au moins une lentille supplémentaire (17, 17') est agencée au voisinage de l'élément de réflexion sélective (15).

14. Moyen de transport (20), **caractérisé en ce que** le moyen de transport (20) présente un afficheur tête haute (10) selon l'une des revendications précédentes.
